# EUROPÄISCHE PATENTANMELDUNG

(11) **EP 4 793 537 A1**
(43) Veröffentlichungstag der Anmeldung: **19.08.2026**
(21) Anmeldenummer: 26155224.4
(22) Anmeldetag: 30.01.2026
(51) Int. Cl.: F17C 5/06

(54) **WASSERSTOFFTANKSTELLE**

(30) Priorität: 13.02.2025 DE 102025105491
(71) Anmelder: Daimler Truck AG, 70771 Leinfelden-Echterdingen (DE)
(72) Erfinder: Busch, Simon, 70771 Leinfelden-Echterdingen (DE); Huegin, Stefan, 70771 Leinfelden-Echterdingen (DE); Vianen, Tim, 70771 Leinfelden-Echterdingen (DE)

(57) **Zusammenfassung**

Die Erfindung betrifft eine Wasserstofftankstelle (1) mit wenigstens einem Tank (2) für flüssigen Wasserstoff (LH2) mit einer Ableitung (3) für verdampften Wasserstoff aus dem wenigstens einen Tank (2), welche einen Wärmetauscher (5) aufweist. Die erfindungsgemäße Wasserstofftankstelle ist dadurch gekennzeichnet, dass die Ableitung (3) mit einem dem verdampften Wasserstoff betreibbaren Energiewandler (8) verbunden ist, wobei der Energiewandler (8) elektrische Energie bereitstellt und dafür eingerichtet ist, diese elektrische Energie direkt oder mittelbar zumindest teilweise in ein elektrisches Energieversorgungsnetz (14) einzuspeisen.

## Beschreibung

Die Erfindung betrifft eine Wasserstofftankstelle mit wenigstens einem Tank für flüssigen Wasserstoff nach der im Oberbegriff von Anspruch 1 näher definierten Art.

In Brennstoffzellen-Fahrzeugen, insbesondere für den Einsatz von Brennstoffzellensystemen in Nutzfahrzeugen und schweren Nutzfahrzeugen, bietet sich flüssiger Wasserstoff an, um eine ausreichend große Wasserstoffmenge bei moderatem Druck in den Fahrzeugen speichern zu können. Der tiefkalte flüssige Wasserstoff kann in an sich bekannten Wasserstoff tankstellen bevorratet werden. Die Fahrzeuge tanken dann den flüssigen Wasserstoff an der Wasserstofftankstelle. Typische Wasserstofftankstellen, wie sie derzeit bereits existieren oder im Aufbau sind, speichern den flüssigen Wasserstoff in einem oder mehreren Tanks, von welchem er aus, insbesondere als sogenanntes sub-cooled Liquid Hydrogen (sLH2) in die geeigneten Tanks der Fahrzeuge getankt werden kann.

Problematisch ist es, dass bei der Speicherung von tiefkaltem flüssigem Wasserstoff immer eine gewisse Menge des Wasserstoffs verdampft, weil keine Isolierung so effizient realisiert werden kann, dass eine Erwärmung des flüssigen Wasserstoffs in dem Tank gänzlich ausgeschlossen werden kann. Der verdampfte Teil des Wasserstoffs wird als Boil-Off-Gas bezeichnet. Er kann in dem Tank bis zu einem gewissen Druckniveau als Gasblase über der Flüssigkeit gespeichert werden. Danach muss er aus dem Tank entnommen oder abgelassen werden, um einen kritischen Überdruck in dem Tank zu vermeiden.

Die US 2016 / 0 230 931 A1 beschreibt eine Wasserstofftankstelle für flüssigen Wasserstoff, bei welchem dieses sogenannte Boil-Off-Gas in einem Druckgasspeicher zwischengespeichert wird. Es wird dann teilweise direkt katalytisch verbrannt und teilweise zur Rückgewinnung von Kälte durch einen Wärmetauscher geführt. Der Wasserstoff aus dem Wärmetauscher werden dann ebenfalls katalytisch verbrannt oder ausreichend verdünnt direkt in die Umgebung abgelassen.

Diese Lösung ist in der Praxis nicht übermäßig sinnvoll und mit hohen Emissionen und insbesondere sehr hohen Kosten verbunden. Untersuchungen der Erfinder haben gezeigt, dass an einer durchschnittlichen Wasserstofftankstelle für flüssigen Wasserstoff jeden Tag mehr als 60 kg an Boil-Off-Gasen anfallen. Dies summiert sich über eine Woche auf etwas mehr als 450 kg. Die damit verbundenen Kosten liegen derzeit bei ungefähr 5.500 Euro, was sich auf deutlich mehr als 250.000 Euro im Jahr summiert. Wasserstoff für diesen Gegenwert wird also verbrannt oder in die Umgebung abgelassen.

Aus dem Bereich der Tankschiffe für flüssigen Wasserstoff ist es aus der
KR 102 578 402 B1 bekannt, die Boil-Off-Gase in einem Druckgasspeicher während der Fahrt zwischenzuspeichern und dann als Druckgas zu verwenden. Dabei werden in dem Druckgasspeicher nicht speicherbare Volumina zur Energieerzeugung für das Schiff genutzt, indem beispielsweise Wasserstoff in Verbrennungsmotoren zusätzlich zum eigentlichen Antriebskraftstoff des Schiffs eingespeist wird. Auch eine Stromerzeugung mittels des Druckwasserstoffs wird beschreiben.

Die Aufgabe der hier vorliegenden Erfindung besteht nun darin eine verbesserte Wasserstofftankstelle mit wenigstens einem Tank für flüssigen Wasserstoff anzugeben, welche eine energieeffiziente Betankung von Fahrzeugen wie beispielsweise Nutzfahrzeugen ermöglicht.

Erfindungsgemäß wird diese Aufgabe durch eine Wasserstofftankstelle mit den Merkmalen im Anspruch 1 gelöst. Vorteilhafte Ausgestaltungen und Weiterbildungen ergeben sich aus den hiervon abhängigen Unteransprüchen.

Bei der erfindungsgemäßen Wasserstofftankstelle ist wenigstens ein Tank für flüssigen Wasserstoff vorgesehen. Prinzipbedingt lassen sich dabei Boil-Off-Gase in Form von verdampftem Wasserstoff nicht verhindern. Der Tank weist daher eine Ableitung für verdampften Wasserstoff aus dem wenigstens einen Tank auf. Diese Ableitung weist einen Wärmetauscher auf. Erfindungsgemäß ist es nun vorgesehen, dass die Ableitung mit einem mit dem verdampften Wasserstoff, also dem Boil-Off-Gas, betreibbaren Energiewandler verbunden ist. Der elektrische Energiewandler stellt aus dem Boil-Off-Gas erzeugte elektrische Energie bereit, die zumindest teilweise in ein elektrisches Energieversorgungsnetz eingespeist wird. Es ist auch denkbar, dass die erzeugte elektrische Energie auch von der Tankstelle selbst genutzt wird.

Das elektrische Energieversorgungsnetz ist dabei so zu verstehen, dass es als terrestrisches Netz mehrere Einspeisepunkte für elektrische Energie beispielsweise aus Kraftwerken, Photovoltaikanlagen, Windkraftanlagen oder dergleichen umfasst und zahlreiche Verbrauchsstellen, über welche elektrische Energie genutzt wird, sei es in Privathaushalten, Industrieanlagen oder dergleichen. Der Energiewandler der erfindungsgemäßen Wasserstofftankstelle ist mit diesem elektrischen Energieversorgungsnetz verbunden, sodass anfallende überschüssige elektrische Energie in dieses Netz eingespeist und anderen Verbrauchern zur Verfügung gestellt werden kann. Selbstverständlich kann die elektrische Energie oder ein Teil derselben auch innerhalb der Wasserstofftankstelle Verwendung finden, beispielsweise zum Batterieelektrischen Fahrzeugen oder Plug-In Hybrid-Fahrzeugen, aber auch zur elektrischen Energieversorgung eines Verkaufsraums oder dergleichen. Der Anschluss an das elektrische Energieversorgungsnetz bietet dabei den Vorteil, dass bei Bedarf auch Netzenergie innerhalb der Wasserstofftankstelle verwendet werden kann, und dass ein Überschuss von bereitgestellter elektrischer Energie problemlos über das elektrische Energieversorgungsnetz anderen Verbrauchern zur Verfügung gestellt werden kann.

Das elektrische Energieversorgungsnetz ist dabei vorzugsweise so ausgestaltet, dass es einen Hochspannungsteil und einen Niederspannungsteil umfasst. Es kann also insbesondere ein öffentliches elektrisches Energieversorgungsnetz eines Energieversorgers sein.

Gemäß einer weiteren sehr vorteilhaften Ausgestaltung der erfindungsgemäßem Wasserstofftankstelle kann die Ableitung einen Druckgasspeicher zur Speicherung des verdampften Wasserstoffs aufweisen. Über einen Druckgasspeicher kann der verdampfte Wasserstoff, also das Boil-Off-Gas, zwischengespeichert werden. Dies bietet den Vorteil, dass durch die Zwischenspeicherung ein vergleichsweise kontinuierlicher Betrieb des elektrischen Energiewandlers möglich wird, welcher beispielsweise immer dann gestartet wird, wenn der Druckgasspeicher einen gewissen Füllstand bzw. Druck erreicht hat und dann kurz vor dem Leerwerden des Druckgasspeichers gestoppt wird. Dann wird wieder gewartet, bis sich ausreichend Boil-Off-Gas angesammelt hat, um so den elektrischen Energiewandler nicht ständig aus- und einschalten zu müssen, was je nach Typ des elektrischen Energiewandlers gegebenenfalls mit Nachteilen hinsichtlich des Wirkungsgrades und/oder der Lebensdauer verbunden sein könnte.

Gemäß einer weiteren sehr vorteilhaften Ausgestaltung kann in der Ableitung eine Gasfördereinrichtung angeordnet sein. Eine solche Gasfördereinrichtung kann dazu dienen den verdampften Wasserstoff gezielt durch den Wärmetauscher und optional in den Druckgasspeicher zu leiten und zu fördern, unabhängig vom gegebenenfalls schwankenden anfallenden Druck des Boil-Off-Gases.

Der Energiewandler selbst kann gemäß einer vorteilhaften Ausgestaltung eine Verbrennungskraftmaschine und einen Generator aufweisen. Er könnte also als Gasturbine, Wasserstoffmotor oder dergleichen ausgestaltet sein und über einen angeschlossenen Generator die gewünschte elektrische Energie bereitstellen, welche dann zumindest teilweise in das elektrische Energieversorgungsnetz eingespeist werden kann. Insbesondere bei diesem Aufbau, bei welchem eine Verbrennungskraftmaschine zum Einsatz kommt, würde auch Wärme anfallen, sodass der elektrische Energiewandler prinzipiell als Blockheizkraftwerk konzipiert werden könnte, welcher über Kraft-Wärme-Kopplung sowohl elektrische Energie als auch Wärmeenergie, beispielsweise als Heizenergie oder Prozesswärme, zur Verfügung stellen kann.

Eine alternative und besonders bevorzugte Ausgestaltung könnte es auch vorsehen, dass der Energiewandler als elektrochemischer Energiewandler, insbesondere als Niedertemperaturbrennstoffzelle, ausgebildet ist. Über eine solche Niedertemperaturbrennstoffzelle, beispielsweise in PEM-Technologie, ließe sich mit hohem Wirkungsgrad elektrische Energie aus dem angefallenen verdampften Wasserstoff erzeugen, welche dann wiederum zumindest teilweise in das elektrische Energieversorgungsnetz eingespeist werden könnte. Um den Aufwand hinsichtlich der Konzipierung der Wasserstofftankstelle möglichst gering zu halten könnte hier ein kommerziell erhältliches stationäres Brennstoffzellensystem zum Einsatz kommen, es ließe sich jedoch auch ein eigenständiges auf die Anwendung und die anfallenden Wasserstoffmengen hin optimiertes System darstellen.

Je nach Art der Erzeugung der elektrischen Energie fällt nun beispielsweise die elektrische Leistung mit Gleichspannung oder Wechselspannung an. Bei Bedarf kann also über einen elektrischen Wandler bzw. Wechselrichter die Art der anfallenden elektrischen Leistung in eine zu dem Spannungsniveau und insbesondere der Netzfrequenz des elektrischen Energieversorgungsnetzes geeignete Leistung gewandelt werden.

Ergänzend hierzu kann eine elektrische Energiespeichereinrichtung vorgesehen sein, insbesondere in Kombination mit dem elektrochemischen Energiewandler, sodass dieser zusammen mit der elektrischen Energiespeichereinrichtung, beispielsweise einer Lithium-Ionen-Batterie, eine Energieerzeugungs- und Speicherungseinheit ausbildet, welche dann über einen Wechselrichter am elektrischen Energieversorgungsnetz angeschlossen ist. Bei Bedarf kann so elektrische Energie zwischengespeichert werden, beispielsweise um sie innerhalb der Wasserstofftankstelle zu verwenden und hier gegebenenfalls auch parallel zur Betankung mit Wasserstoff elektrische Traktionsbatterien der Fahrzeuge nachzuladen. Durch den Einsatz von Batterien können auch Leistungsspitzen abgepuffert werden, wodurch die Menge an aus dem elektrischen Energieversorgungsnetz benötigter elektrischer Leistung reduziert wird und im Gegenzug die Menge an eingespeister elektrischer Leistung zu minimieren sowie zeitlich besser an den Leistungsbedarf in dem elektrischen Energieversorgungsnetz anzupassen. So kann elektrische Leistung beispielsweise zwischengespeichert werden, wenn das elektrische Energieversorgungsnetz aufgrund zahlreicher Photovoltaikanlagen ohnehin ein hohes Leistungsangebot hat, um dann in Zeiten, in denen die Sonne nicht scheint aber dennoch Boil-Off-Gas anfällt, wie beispielsweise nachts, Energie bereitzustellen und zu finanziell interessanten Konditionen in das elektrische Energieversorgungsnetz einzuspeisen.

Wie oben bereits erwähnt kann über den Wärmetauscher einerseits der Wasserstoff, welcher als Boil-Off-Gas unmittelbar nach dem Tank immer noch eine sehr niedrige Temperatur aufweist, entsprechend erwärmt werden, um in einer Brennstoffzelle umgesetzt werden zu können, ohne durch seine niedrige Temperatur die Brennstoffzelle bzw. Bauteile der Brennstoffzelle zu gefährden bzw. zu vereisen. Gleichzeitig kann die dabei in dem Wärmetauscher anfallende Kälte ideal genutzt werden, um Kühlungsaufgaben innerhalb der Wasserstofftankstelle zu übernehmen, beispielsweise Gasströme rückzukühlen oder dergleichen.

Der flüssige Wasserstoff soll dabei in der erfindungsgemäßen Wasserstofftankstelle insbesondere in Form von sogenanntem sLH2 (sub cooled Liquid Hydrogen) zur Betankung von Kraftfahrzeugen eingesetzt werden.

Alles in allem wird durch die erfindungsgemäße Wasserstofftankstelle in einer der beschriebenen Ausführungsvarianten somit eine sehr effiziente Nutzung von Energie möglich, da der in dem wenigstens einen Tank gespeicherte flüssige Wasserstoff entweder zur Betankung von Fahrzeugen eingesetzt wird oder als verdampfter Wasserstoff bzw. Boil-Off-Gas über den Energiewandler in elektrische Energie und zumindest teilweise in Wärmeenergie umgewandelt wird. Diese Energie kann dann genutzt werden. Anders als im eingangs genannten Stand der Technik wird kein Wasserstoff gezielt in die Umgebung abgelassen oder zur Verringerung der Emissionen katalytisch umgesetzt. Damit wird eine effiziente Nutzung der Energie im Wasserstoff ermöglicht und gleichzeitig werden schädliche Emissionen in die Umwelt, insbesondere beim Einsatz eines elektrochemischen Energiewandlers, minimiert.

Weitere vorteilhafte Ausgestaltungen der erfindungsgemäßen Wasserstofftankstelle ergeben sich auch aus dem beispielhaft durch die einzige beigefügte Figur schematisch erläuterten Aufbau.

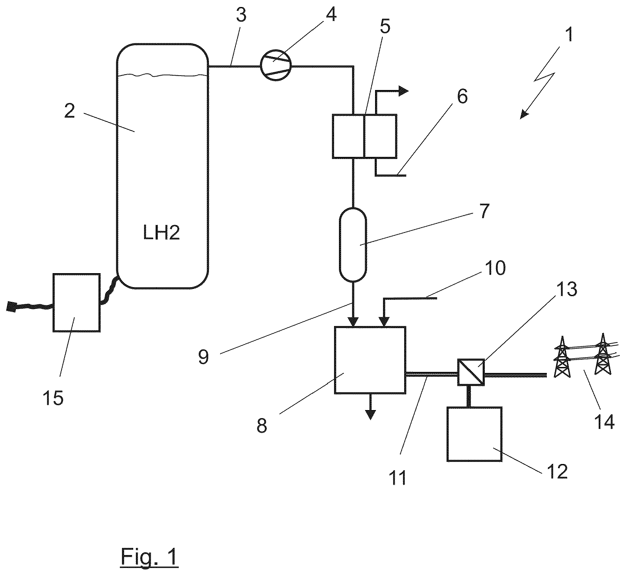

In der Darstellung der einzigen beigefügten Figur 1 ist dabei ein schematischer Aufbau einer möglichen Wasserstofftankstelle gemäß der Erfindung skizziert.

Die Wasserstofftankstelle 1 umfasst wenigstes einen mit 2 bezeichneten Tank für flüssigen Wasserstoff. Im Bereich des Tanks 2 ist außerdem eine Tankanlage 15 erkennbar. Sie dient zum Betanken von Fahrzeugen mit dem flüssigen Wasserstoff LH2. Sie ist jedoch an sich bekannt und für die hier vorliegende Erfindung von untergeordneter Bedeutung, weshalb darauf nicht weiter eingegangen wird.

In dem Tank 2 fallen prinzipbedingt sogenannte Boil-Off-Gase an, also verdampfter Wasserstoff, welcher ab einem gewissen Druckniveau in dem Tank 2 abgelassen oder abgepumpt werden muss. Hierfür dient eine mit 3 bezeichnete Ableitung für die Boil-Off-Gase. In dieser Ableitung 3 kann vorzugsweise eine mit 4 bezeichnete Fördereinrichtung, beispielsweise eine Pumpe, für die hier immer noch tiefkalten Gase angeordnet sein. Auf diese Pumpe 4 kann nun ein mit 5 bezeichneter Wärmetauscher folgen, in welchem das Gas erwärmt wird, wobei über die angedeutete mit 6 bezeichnete Leitung Kälte für weitere Kühlanwendungen innerhalb oder außerhalb der Wasserstofftankstelle 1 zur Verfügung gestellt werden kann. Auf diesem Wärmetauscher 5 folgt dann ein optionaler Druckgasspeicher 7, in welchem der gasförmige Wasserstoff zwischengespeichert werden kann, um nach dem Druckgasspeicher 7 für einen gewissen Zeitraum einen möglichst kontinuierlichen Wasserstoffvolumenstrom zur Verfügung zu stellen. Dieser Wasserstoffvolumenstrom gelangt dann in einen Energiewandler 8 zur Bereitstellung von elektrischer Leistung.

Bei diesem Energiewandler 8 kann es sich vorzugsweise - aber nicht zwingend - um ein Brennstoffzellensystem handeln. Diesem Brennstoffzellensystem wird der gasförmige Wasserstoff direkt aus dem Wärmetauscher 5 oder dem optionalen Druckgasspeicher 7 über eine Zuleitung 9 zugeführt. Der unter Druck stehende gasförmige Wasserstoff nach dem Wärmetauscher 5 bzw. dem optionalen Druckgasspeicher 7 wird dabei typischerweise von einem höheren Druckniveau auf ein niedrigeres Druckniveau zur Umsetzung in der Brennstoffzelle 8 gebracht. Dies kann beispielsweise durch eine Venturi-Düse oder einen Turbolader (beides nicht dargestellt) erfolgen, um so die Druckenergie in dem Wasserstoff zusätzlich zu nutzen, um beispielsweise einen Rezirkulationskreislauf für den Wasserstoff innerhalb des Brennstoffzellensystems mit Energie zu versorgen und/oder die Förderung der zur Umsetzung des Wasserstoffs ebenfalls benötigte Luft über eine angedeutete mit 10 bezeichnete Zuluftleitung in das Brennstoffzellensystem 8 zu unterstützen. Der Turbolader kann insbesondere als sogenannter elektrischer bzw. elektrisch unterstützter Turbolader ausgebildet sein.

Nach dem Brennstoffzellensystem 8 fällt dann feuchte Abluft und Produktwasser an. Je nach Konzept des Brennstoffzellensystems 8 können von Zeit zu Zeit minimale Restmengen an verdünntem Wasserstoff in die Umgebung gelangen. Insgesamt verursacht der beschriebene Aufbau jedoch kaum schädliche Emissionen.

Über das Brennstoffzellensystem 8 wird elektrische Energie zur Verfügung gestellt, welche über elektrische Leitungen ***11*** in einer optionalen Batterie 12 zwischengespeichert werden kann, bevor sie entweder innerhalb der Wasserstofftankstelle 1 Verwendung findet, beispielsweise zum Antrieb von für die Betankung notwendigen Komponenten und/oder zum Laden von Traktionsbatterien von Fahrzeugen. Außerdem ist das Brennstoffzellensystem 8 sowie die optionale Batterie 12 über einen angedeuteten Wechselrichter 13 in jedem Fall mit einem elektrischen Energieversorgungsnetz 14 verbunden, welches beispielsweise ein öffentliches Energieversorgungsnetz sein kann, und in welches anfallende elektrische Überschussleistung eingespeist werden kann, um sie anderen Verbrauchern zur Verfügung zu stellen.

Ausgehend von dem eingangs genannten Beispiel, bei welchem in einer durchschnittlichen Wasserstofftankstelle 1 etwas mehr als 60 kg an Boil-Off-Gasen pro Tag anfallen, könnte bei üblichen Brennstoffzellenaufbauten und Wirkungsgraden hieraus ca. 900 kWh an elektrischer Energie bereitgestellt werden, welche dann in das elektrische Energieversorgungsnetz 14 eingespeist werden könnte. Je nach Verlusten der optionalen Batterie 12 zur Zwischenspeicherung und des Wechselrichters 13 ist also eine Energiemenge in der Größenordnung von mehr als 800 kWh pro Tag am Netzeinspeisepunkt zu erwarten. Diese Energiemenge kann nun also zusätzlich genutzt werden und gelangt nicht in Form von Wasserstoffemissionen oder Abgasen einer katalytischen Umsetzung des Wasserstoffs in die Umgebung.

## Patentansprüche

1. Wasserstofftankstelle (1) mit wenigstens einem Tank (2) für flüssigen Wasserstoff (LH2) mit einer Ableitung (3) für verdampften Wasserstoff aus dem wenigstens einen Tank (2), welche einen Wärmetauscher (5) aufweist,
**dadurch gekennzeichnet, dass**
die Ableitung (3) mit einem dem verdampften Wasserstoff betreibbaren Energiewandler (8) verbunden ist, wobei der Energiewandler (8) elektrische Energie bereitstellt und dafür eingerichtet ist, diese elektrische Energie direkt oder mittelbar zumindest teilweise in ein elektrisches Energieversorgungsnetz (14) einzuspeisen.

2. Wasserstofftankstelle (1) nach Anspruch 1,
**dadurch gekennzeichnet, dass**
das angeschlossene elektrische Energieversorgungsnetz (14) zumindest einen Hochspannungsteil und einen Niederspannungsteil umfasst.

3. Wasserstofftankstelle (1) nach Anspruch 1 oder 2,
**dadurch gekennzeichnet, dass**
die Ableitung (3) einen Druckgasspeicher (7) zur Speicherung des verdampften Wasserstoffs aufweist.

4. Wasserstofftankstelle (1) nach Anspruch 1, 2 oder 3,
**dadurch gekennzeichnet, dass**
die Ableitung (3) eine Gasfördereinrichtung (4) aufweist.

5. Wasserstofftankstelle (1) nach einem der Ansprüche 1 bis 4,
**dadurch gekennzeichnet, dass**
der Energiewandler (8) eine Verbrennungskraftmaschine und einen Generator aufweist.

6. Wasserstofftankstelle (1) nach einem der Ansprüche 1 bis 5,
**dadurch gekennzeichnet, dass**
der Energiewandler (8) einen elektrochemischen Energiewandler aufweist.

7. Wasserstofftankstelle (1) nach einem der Ansprüche 1 bis 6,
**dadurch gekennzeichnet, dass**
zwischen dem Energiewandler (8) und dem elektrischen Energieversorgungsnetz (14) eine elektrische Energiespeichereinrichtung (12) angeordnet ist.

8. Wasserstofftankstelle (1) nach einem der Ansprüche 1 bis 7,
**dadurch gekennzeichnet, dass**
der Wärmetauscher (5) Kälte für Kühlanwendungen bereitstellt.

9. Wasserstofftankstelle (1) nach einem der Ansprüche 1 bis 8,
**dadurch gekennzeichnet, dass**
die Betankung von Fahrzeugen mittels sLH2 (sub-cooled Liquid Hydrogen) erfolgt.

10. Wasserstofftankstelle (1) nach einem der Ansprüche 1 bis 9,
**dadurch gekennzeichnet, dass**
wenigstens ein elektrischer Ladeanschluss für Traktionsbatterien von Fahrzeugen vorgesehen ist.
